(19) Europäisches Patentamt / European Patent Office / Office européen des brevets

(11) **EP 1 914 064 B1**

(12) **EUROPEAN PATENT SPECIFICATION**

(45) Date of publication and mention
of the grant of the patent:
**16.10.2013 Bulletin 2013/42**

(51) Int Cl.:
*B32B 15/08* (2006.01)    *B32B 15/09* (2006.01)
*C08L 67/02* (2006.01)    *B32B 15/18* (2006.01)
*B32B 27/06* (2006.01)    *B32B 27/28* (2006.01)
*B32B 27/32* (2006.01)    *B32B 27/36* (2006.01)
*B32B 1/02* (2006.01)    *C08L 23/00* (2006.01)

(21) Application number: **06796478.3**

(22) Date of filing: **10.08.2006**

(86) International application number:
**PCT/JP2006/316121**

(87) International publication number:
**WO 2007/020950 (22.02.2007 Gazette 2007/08)**

(54) **LAMINATE STEEL SHEET FOR CAN BODY OF TWO-PIECE CAN AND TWO-PIECE CAN COMPRISING LAMINATE STEEL SHEET**

LAMINIERTES STAHLBLECH FÜR DEN DOSENKÖRPER EINER ZWEITEILIGEN DOSE UND ZWEITEILIGE DOSE MIT LAMINATSTAHLBLECH

FEUILLE D'ACIER STRATIFIÉE POUR CORPS DE BOÎTE EN DEUX PARTIES ET BOÎTE EN DEUX PARTIES COMPRENANT UNE FEUILLE D'ACIER STRATIFIÉE

(84) Designated Contracting States:
**DE FR GB NL PT**

(30) Priority: **12.08.2005   JP 2005234557**

(43) Date of publication of application:
**23.04.2008   Bulletin 2008/17**

(73) Proprietor: **JFE Steel Corporation
Tokyo, 100-0011 (JP)**

(72) Inventors:
• **KUBO, Hiroshi
Tokyo; 1000011 (JP)**
• **KOJIMA, Katsumi
Tokyo; 1000011 (JP)**
• **NISHIHARA, Yuka
Tokyo; 1000011 (JP)**
• **YASUE, Yoshihiko
Tokyo; 1000011 (JP)**
• **IWASA, Hiroki
Tokyo; 1000011 (JP)**

(74) Representative: **Henkel, Breuer & Partner
Patentanwälte
Maximiliansplatz 21
80333 München (DE)**

(56) References cited:
**EP-A- 0 688 813        JP-A- 09 123 352
JP-A- 2004 124 064**

**Description**

Technical Field

The present invention relates to a high strain two-piece can formed of a laminated steel sheet, such as a two-piece aerosol can, and a laminated steel sheet suitably used in the manufacture of the two-piece can.

Background Art

Metal cans are divided broadly into two-piece cans and three-piece cans. Two-piece cans are composed of a lid and a can body having a bottom. Three-piece cans are composed of a can body, a top lid, and a bottom lid. While two-piece can bodies have an excellent appearance without a seam (a weld), the bodies generally require a high strain level. While three-piece can bodies have a seam and are inferior in appearance to the two-piece cans, the bodies generally do not require a high strain level. Thus, two-piece cans have often been used for small-sized high-quality articles, and three-piece cans have often been used for large-sized low-priced articles in the market.

Among the two-piece cans, a body of deep-drawn (hereinafter also referred to as high strain) two-piece cans, such as aerosol cans, is generally formed of an expensive thick aluminum sheet, and is rarely formed of an inexpensive thin tinplate or tin-free steel sheet. While the two-piece aerosol cans require a very high strain level, a high strain level, such as drawing or drawing and ironing (DI), is difficult to apply to steel sheets. In contrast, soft metallic materials, such as aluminum, can be subjected to impact molding.

Under such circumstances, it is industrially very important to manufacture high strain two-piece can bodies formed of an inexpensive, thin, but high-strength steel sheet material, such as tinplate or tin-free steel.

Common low-strain two-piece cans are known to be manufactured by drawing or DI processing of resin-coated steel sheets (herein also referred to as laminated steel sheets).

In a method for manufacturing such low-strain two-piece cans, laminated steel sheets generally have a polyester coat. Examples of the polyester include polyethylene terephthalate, ethylene terephthalate-isophthalate copolymers, ethylene terephthalate-butylene terephthalate copolymers, and ionomer compounds containing a saturated polyester as a main phase. These polyesters are suitably designed only for methods for manufacturing low-strain two-piece cans. However, no investigation has been conducted on a method for manufacturing a can body that requires complicated neck-in  processing after drawing as in two-piece aerosol cans.

For example, although Patent Documents 1 to 3 disclose drawing and DI processing techniques for resin-coated metal sheets, these techniques are directed toward low-strain can bodies, such as beverage cans and food cans, and do not require the same strain level as those in two-piece aerosol cans.

In manufacture of low-strain two-piece cans, heat treatment after shaping is known to relieve the internal stress caused by the shaping or promote the orientation of resin. However, the heat treatment is also suitably designed only for methods for manufacturing low-strain two-piece cans.

For example, Patent Documents 2 and 3 disclose heat treatment in a shaping step or a final step to prevent the delamination of a resin layer or to provide barrier properties after shaping. More specifically, Patent Document 2 proposes heat treatment of a thermoplastic resin that has a tendency to be oriented to relieve the internal stress and promote the crystallization. Heat treatment has generally been used for beverage cans. Patent Document 2 states that the heat treatment is conducted to a redrawn cup preferably at or below a temperature at which a coated resin is sufficiently crystallized (melting point - 5°C). However, the example describes only a low-strain can.

Patent Document 3 discloses in the examples DI processing of metal sheets that are coated with a resin composed of a saturated polyester and an ionomer compound. Patent Document 3 describes heat treatment after drawing, and subsequent DI processing, necking, and flanging. The examples also describe only low-strain cans.

Patent Documents 4 and 5 disclose methods for relieving the internal stress by heat-treating a can principally at or above the melting point of a resin after the formation of the can. However, the descriptions and the examples also describe only low-strain cans.

Patent Document 1: Japanese Examined Patent Application Publication No. 7-106394
Patent Document 2: Japanese Patent No. 2526725
Patent Document 3: Japanese Unexamined Patent Application Publication No. 2004-148324
Patent Document 4: Japanese Examined Patent Application Publication No. 59-35344
Patent Document 5: Japanese Examined Patent Application Publication No. 61-22626

Thus, hitherto, high strain bodies of two- piece cans, such as aerosol cans, have never been manufactured with a laminated steel sheet.

The present invention aims to solve the problems described above. Accordingly, it is an object of the  present invention to provide a two-piece can that is formed of a laminated steel sheet, is shaped in a high strain manner as in two-piece aerosol cans, and is free from delamination and breakage of a resin layer. It is another object of the present invention to provide a laminated steel sheet for use in the manufacture of the two-piece can.

Disclosure of Invention

The present invention provides a laminated steel sheet for use in the manufacture of a two-piece can body, comprising a polyester resin layer on at least one side of the steel sheet, the polyester resin layer containing 3% to 30% by volume of dispersed incompatible subphase resin having a glass transition point of 5°C or less and a cross sectional aspect ratio of 0.20 or less, wherein the two-piece can body satisfies the following three formulae:

$$d \leq r;$$

$$0.1 \leq d/R \leq 0.25;$$

and

$$1.5 \leq h/(R - r) \leq 4,$$

wherein R denotes the radius of a circular laminated steel sheet that has the same weight as that of the two-piece can body before shaping, h denotes the height of the can body, r denotes the maximum radius of the can body, and d denotes the minimum radius of the can body.

Preferably, in a laminated steel sheet according to the present invention, the polyester resin is mainly composed of a diol component of ethylene glycol and at least one dicarboxylic acid component selected from the group consisting of terephthalic acid and isophthalic acid.

Preferably, in a laminated steel sheet according to the present invention, the subphase resin is mainly composed of a polyolefin.

Preferably, in any of the laminated steel sheets described above, the subphase resin is at least one selected from the group consisting of polyethylene, polypropylene, and ionomers.

Furthermore, the present invention provides a two-piece can body made of a laminated steel sheet, comprising a polyester resin layer on at least one side of the steel sheet, the polyester resin layer containing 3% to 30% by volume of dispersed incompatible subphase resin having a glass transition point of 5°C or less and a cross section aspect ratio of 0.20 or less,

wherein the cross section aspect ratio is defined by (major axis- minor axis) / (major axis) of the cross section parallel to the machine direction of a laminated steel sheet,

wherein the two- piece can body satisfies the following three formulae:

$$d \leq r;$$

$$0.1 \leq d/R \leq 0.25;$$

and

$$1.5 \leq h/(R - r) \leq 4,$$

wherein R denotes the radius of a circular laminated steel sheet that has the same weight as that of the two- piece can body before shaping, h denotes the height of the can body, r denotes the maximum radius of the can body, and d denotes the minimum radius of the can body.

Brief Description of the Drawings

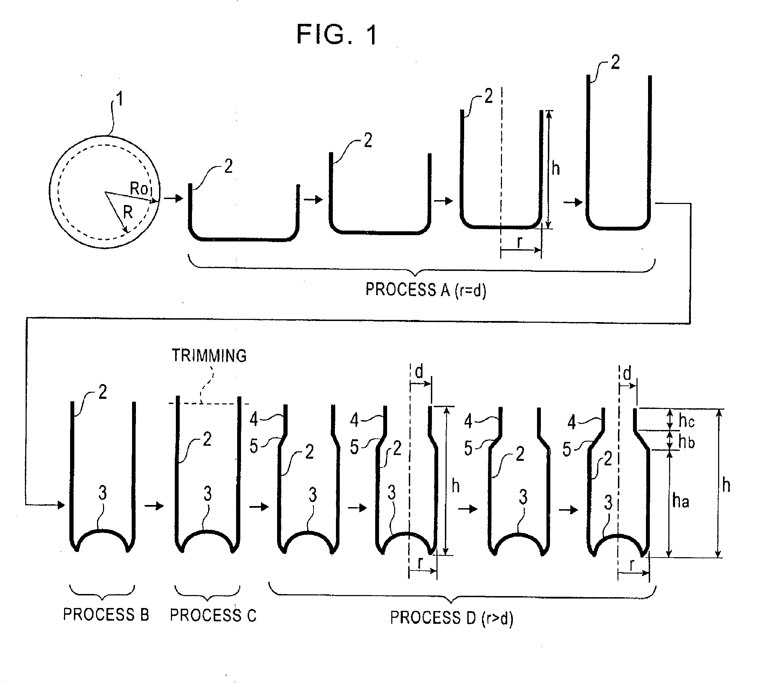

Fig. 1 is a schematic diagram illustrating a process of manufacturing a can body according to an embodiment of the present invention.

Best Mode for Carrying Out the Invention

The present invention will be further described below.

Fig. 1 is a schematic diagram illustrating a process of manufacturing a can body according to an embodiment of the present invention. A circular resin-coated steel sheet blank is drawn (including DI processing) into a tube having a bottom. The neighborhood of an opening of the tube is subjected to neck-in processing, thus forming a two-piece can having a narrow opening. The "circular" used herein refers to a shape that can be subjected to drawing, DI processing, neck-in processing, and/or flanging. Thus, a resin-coated steel sheet to be processed may be generally discoidal, distorted discoidal, or elliptical, as well as discoidal.

In Fig. 1, 1 denotes a circular blank (blank sheet) before shaping, 2 denotes a straight wall of a can body (straight wall that is not neck-in processed in process D), 3 denotes a domed portion, 4 denotes a neck, that is, a neck-in processed straight wall, and 5 denotes a tapered portion, that is, a tapered wall after neck-in processing.

First, the circular blank 1 is drawn (including DI processing) in one step or multiple steps to form a tube having a bottom and having a predetermined radius (radius r; the radius of an outer surface of a can) (process A) . Second, the bottom of the tube is shaped into a domed portion 3 (process B) . Third, an opening of the tube is trimmed (process C) . Fourth, the opening portion of the tube is subjected to neck- in processing in one step or multiple steps to form a neck having a predetermined radius (radius d; the radius of an outer surface of a can), thus forming a desired final product (two- piece can) . $R_0$ denotes the radius of the circular blank 1 before shaping (for an elliptical blank, a mean value of the major axis and the minor axis) . Furthermore, h, r, and d denote the height, the maximum radius, and the minimum radius of the tube during shaping or the final product, respectively. R denotes the radius of the circular sheet that has the same weight as that of the final product before shaping.

$R_0$ is equal to R calculated from the final product plus the trim length, and is determined arbitrarily. However, because a trimmed portion is waste, it is industrially desirable to reduce the size of such a trimmed portion. Thus, $R_0$ is generally 10% or less, and 20% at most, of R.

In other words, $R_0$ is often 1 to 1.1 times, and 1 to 1.2 times at most, as large as R. Furthermore, in manufacture of a plurality of can bodies, R may be determined by trial manufacture.

In process A in manufacture of a two-piece can body according to the present embodiment, the maximum radius r is identical with the minimum radius d, that is, r = d. In process D, the relationship is r > d.

The radius R of a circular sheet that has the same weight as that of a final product before shaping is determined on the basis of the measured weight of the final product. More specifically, after the weight of the final product is measured, a dimension (radius) of the circular laminated steel sheet that has the same weight as that of the final product before shaping is calculated. The dimension is taken as the radius R of the circular sheet that has the same weight as that of the final product before shaping. While an end portion of the can body is trimmed in the manufacturing process, the radius R of the circular sheet that has the same weight as that of the final product before shaping is independent of the trimming. Thus, the strain level can be evaluated more appropriately.

In a two-piece can manufactured by drawing (including DI processing) and neck-in processing of a circular resin-coated steel sheet blank, a resin layer is stretched in a height direction and compresses in a circumferential direction. In a high strain level, a large deformation of the resin results in breakage of the resin layer. The present invention utilizes, as an indicator of the strain level, not only a parameter d/R, which indicates the degree of compression, but also a parameter h/(R - r), which is related to the elongation in the height direction. This is because, in a high strain level, the strain level must be expressed by not only the drawing ratio, but also the elongation. In other words, the deformation of the resin layer is quantified by defining the strain level by both the degree of compression and the degree of elongation. Since the resin layer is likely to delaminate when the resin layer is stretched in the height direction and compressed in the circumferential direction, the degree of elongation in the height direction, as well as the degree of shrinkage, is an important factor.

In terms of the strain level of the resulting can body (final product) according to the present invention, the height h, the maximum radius r, and the minimum radius d of the final product satisfy the relationships of $0.1 \leq d/R \leq 0.25$ and $1.5 \leq h/(R - r) \leq 4$, wherein R denotes the radius of the circular sheet that has the same weight as that of the final product before shaping.

As described above, the present invention aims to manufacture a high strain can body with a laminated steel sheet, which is difficult by known techniques. It has been difficult to manufacture a high strain can body that satisfies the parameter d/R, which defines the degree of shrinkage, of 0.25 or less and the parameter h/(R - r), which defines the degree of elongation, of 1.5 or more at one time, with a laminated steel sheet by known techniques. Thus, d/R was set to be 0.25 or less, and h/(R - r) was set to be 1.5 or more, as the strain level of a can body manufactured according to the present invention.

When the parameter d/R, which defines the degree of compression, is 0.1 or less, or the parameter h/(R - r), which defines the degree of elongation, is more than 4, even if the process is practicable, the number of process steps may increase unnecessarily, or the elongation reaches its limit as work hardening proceeds and thereby the sheet may be broken. Thus, d/R was set to be 0.1 or more, and h/(R - r) was set to be 4 or less, as the strain level of a can body manufactured according to the present invention.

Multistep shaping intended by the present invention includes any of drawing, DI processing, and neck-in processing, or combination thereof. In a process including neck-in processing, the dimension d of the final product meets r > d. In a process including no neck-in processing, the dimension of the final product meets r = d (r and d denote the radii of the final product).

The present invention also provides a laminated steel sheet for use in manufacture of the final product (two-piece can) that satisfies the strain level described above. Thus, the laminated steel sheet includes a polyester resin layer on at least one side of the steel sheet. The polyester resin layer contains 3% to 30% by volume of dispersed incompatible subphase resin having a glass transition point of 5°C or less and a cross sectional aspect ratio of 0.20 or less.

A base metal sheet for use in a laminated steel sheet according to the present invention is a steel sheet, which is lower in cost than aluminum and is economical. It is advisable to use a common tin-free steel sheet or a common tinplate as the steel sheet. Preferably, a tin-free steel includes, for example, 50 to 200 mg/m$^2$ of chromium metal layer and 3 to 30 mg/m$^2$, on a chromium metal basis, of chromium oxide layer on the surface. Preferably, a tin sheet contains 0.5 to 15 g/m$^2$ of tin. The thickness of the steel sheet may be, but not limited to, in the range of 0.15 to 0.30 mm. Furthermore, without any consideration of the cost, the present technique can be applied to aluminum.

At a high strain level by which a final product (two-piece can) as provided in the present invention is manufactured, it was found that the accumulation of internal stress of a resin layer in a laminated steel sheet and work hardening caused by orientation lead to a severe deterioration in formability of the resin. More specifically, (i) a longitudinal crack caused by weakened bonding in a direction perpendicular to a stretching direction due to orientation, (ii) a transversal crack at the limit of elongation in a stretching, and (iii) delamination of a resin layer caused by an increase in internal stress were observed.

To address these problems, a variety of resins were prepared by various methods to examine a resin that does not cause such deterioration.

The present inventors found that a compound resin that contains a soft resin having a glass transition point (Tg) of 5°C or less as a subphase dispersed in a parent phase (main phase) of a polyester is useful as a resin layer of a laminated steel sheet. The subphase resin must be incompatible with the main phase of a polyester resin and be dispersed in the main phase. A study of deformation behavior of the resin demonstrated that the dispersed resin is greatly deformed by strain. This probably relieves the stress caused by the deformation of the entire resin layer.

Furthermore, the degree of orientation caused by deformation is also reduced as compared with a single phase.

When the subphase resin has a glass transition point of 5°C or less, the resin is easily deformed by forming, thus performing the function of the subphase.

Furthermore, in the present invention, the volume percentage of the subphase resin in the polyester resin (main phase) is set to be in the range of 3% to 30% by volume. When the volume percentage of the subphase is 3% by volume or more, the subphase can easily relieve the stress. When the volume percentage of the subphase is 30% by volume or less, subphase particles are sufficiently dispersed in the main phase resin layer. However, when the volume percentage of the subphase is more than 30% by volume, the subphase resin may aggregate and result in insufficient dispersion. An example of such a dispersion state is a system in which an incompatible subphase resin having a particle size in the range of 0.1 to 5 μm is dispersed in a polyester resin of the main phase.

In general, methods for applying a resin to a steel sheet are divided broadly into resin film heat lamination methods and direct extrusion methods, which directly form a resin layer on a steel sheet, for example, using a T-die. Furthermore, the films used in heat lamination methods are divided broadly into stretched films, such as biaxial stretched films, and non-stretched films involving an extrusion process (including slight stretching in a machine direction).

As a result of evaluation of laminated steel sheets manufactured from a compound resin according to the present invention by the various lamination methods described above, the present inventors found that a laminated steel sheet manufactured by a direct extrusion method and a laminated steel sheet in which a well-molten resin layer is laminated in heat lamination of a biaxially oriented film to a steel sheet are promising.

A further detailed examination demonstrated extensive involvement of the aspect ratio of the subphase.

A subphase resin deforms with the deformation of a main phase resin, for example, by stretching. When a molten compound resin is cooled in the absence of stretching, the subphase resin becomes almost spherical. In a stretching method, a semi-molten resin is stretched and becomes thin. A subphase resin is deformed and becomes flat by the stretching method. More specifically, a subphase resin shrinks in a thickness direction and is stretched in a stretching direction, in response to a reduction in film thickness associated with stretching.

For example, in a biaxial stretching method in which the stretching ratios in the machine direction and the transverse direction are the same, the subphase resin becomes circular in a stretching plane and shrinks in the thickness direction.

When a semi-molten compound resin is uniaxially stretched, the resin shrinks in the thickness direction and is stretched in the machine direction. Thus, on the cross section of a formed film parallel to the film surface, the subphase resin is elliptical with the major axis being in the machine direction. Furthermore, on the cross section of the formed film perpendicular to the film surface and parallel to the machine direction, the subphase resin is also elliptical with the major axis being in the machine direction. On the cross section of the formed film perpendicular to both the film surface and the machine direction, the subphase resin is almost circular or slightly shrinks in the thickness direction. Thus, the subphase becomes flat after deformation, such as stretching.

As described above, it was found that the biaxially or uniaxially stretched compound resin becomes flat in the stretching direction. It was also found that the degree of flatness affects the formability and the delamination.

The term "cross section aspect ratio" of a subphase resin as used herein is defined by the following equation for an elliptical subphase resin on the cross section parallel to the machine direction of a laminated steel sheet.

$$\text{Aspect ratio} = (\text{major axis} - \text{minor axis}) / (\text{major axis})$$

A subphase having a low aspect ratio tends to be excellent in the formability or the adhesion after deformation. Thus, it was found that, in a high strain level, a lower aspect ratio of a subphase in a compound resin-coated steel sheet leads to better formability or better adhesion after deformation. The relationship between the stretching direction and the deforming direction in can forming varies continuously from parallel to perpendicular in a manner that depends on the position of the can. When the aspect ratio of a subphase is high, the allowable deformation of a subphase in forming is small in a certain direction. More specifically, a subphase stretched in the deforming direction probably has a small deformation allowance for the subsequent forming. This may suppress the intrinsic function of the subphase. In any case, an aspect ratio of more than 0.5 leads to deterioration on the formability or the adhesion after forming. The aspect ratio of a subphase is set to be 0.20 or less in the present invention.

The polyester resin is produced by polycondensation of a dicarboxylic acid component and a diol component.

The polyester resin, which is a main phase of a compound resin according to the present invention, is mainly composed of at least one dicarboxylic acid selected from the group consisting of terephthalic acid and isophthalic acid and ethylene glycol in terms of the balance between the elongation and the strength required for forming. The phrase "mainly composed of" as used herein refers to constituting 70% to 100% by mole, preferably 85% by mole or more, and more preferably 92% by mole or more of a resin used in the polyester resin.

Preferably, a resin having a glass transition point of 5°C or less serving as a subphase in a compound resin according to the present invention is mainly composed of a polyolefin in terms of deformation. Preferably, the polyolefin is at least one selected from the group consisting of polyethylene, polypropylene, and ionomers in terms of versatility, dispersibility, and cost.

A laminated steel sheet according to the present invention may contain an additive agent, such as a pigment, a lubricant, or a stabilizer in the resin layer. A laminated steel sheet according to the present invention may contain a second resin layer having another function other than a first resin layer according to the present invention as an upper layer or an intermediate layer between the first resin layer and the base steel sheet.

Preferably, the thickness of the resin layer is, but not limited to, in the range of 10 to 50 $\mu$m. A film laminate having a thickness less than 10 $\mu$m is generally expensive. Furthermore, while a film laminate having a larger thickness exhibits more excellent formability, it becomes more expensive. A film laminate having a thickness more than 50 $\mu$m has saturated effects on the formability and is expensive.

A laminated steel sheet according to the present invention includes a resin layer according to the present invention on at least one side of the steel sheet.

The resin layer may appropriately be applied to the steel sheet by any method, including a heat lamination of a biaxially oriented film or a non-oriented film and an extrusion process for forming the resin layer directly on the steel sheet, for example, using a T-die. It has been shown that any of the methods is satisfactorily effective.

In manufacture of a two-piece can by shaping a laminated steel sheet according to the present invention in multiple steps, to prevent the delamination of a resin layer, a product is suitably heat-treated at a temperature of at least the glass transition point of a polyester resin to relieve the internal stress of the resin during forming or in a final process. Furthermore, a product may appropriately be heat-treated at a temperature of at least the melting point of the polyester resin to eliminate the orientation produced by deformation.

A heat treatment method is not limited to any particular method. It has been shown that an electric furnace, a gas oven, an infrared furnace, and an induction heater are effective in a similar way. The heating rate, the heating time, and the cooling rate are appropriately selected in a manner that depends on the effect. The efficiency increases with the heating rate. The heating time is generally, but not limited to, in the range of about 15 to 60 seconds. Furthermore, the shorter cooling time is preferred to prevent the generation of spherulite. Thus, the time to cool a product to or below the glass transition point of the polyester resin after heat treatment is preferably as short as possible.

EXAMPLE 1

Embodiments of the present invention will be described below.

Manufacture of Laminated Steel Sheet

Various resin layers were formed on T4CA TFS (metal Cr layer: 120 mg/m$^2$, and Cr oxide layer: 10 mg/m$^2$ on a metal Cr basis) having a thickness of 0.20 mm by a film laminate method (film heat lamination method) or a direct laminate method (direct extrusion method). The film laminate was performed with a biaxially oriented film and a non-oriented film. Films having a thickness of 25 $\mu$m were laminated on both faces of the metal sheet to manufacture a laminated steel sheet.
The shape of dispersed particles in the resin of the resulting laminated steel sheet was determined as described below.

<Determination of the shape of dispersed particles>

The laminated steel sheet was embedded in a resin, and was polished for the observation of a cross section in the machine direction (longitudinal laminate direction). The polished surface was then dipped in a 1 N NaOH solution for 10 minutes, and was washed with water. Dispersed 50 olefin particles on the cross section were observed with a scanning electron microscope. The major axis and the minor axis of each particle were measured. The aspect ratio was calculated from the major axis and the minor axis. The mean value of the aspect ratios of the 50 particles was taken as the aspect ratio.
Tables 1 and 2 show a method for manufacturing the laminated steel sheet and the laminated steel sheets thus manufactured.
The lamination methods are as follows:

Film heat lamination method 1:

A biaxially oriented film was press-bonded to a steel sheet with a nip roller while the steel sheet was heated at (melting point of the resin + 10°C). Within seven seconds, the laminated steel sheet was cooled with water.

Film heat lamination method 2:

A non-oriented film was press-bonded to a steel sheet with a nip roller while the steel sheet was heated at (melting point of the resin + 10°C). Within seven seconds, the laminated steel sheet was cooled with water.

Direct extrusion method:

Resin pellets were kneaded, melted, and extruded from a T-die on a running steel sheet. The resin-coated steel sheet was then cooled with a chill roll at 80°C, and was further cooled with water.

Formation of Can Body

A can body (final product) was manufactured as described below from the steel sheet specimen thus manufactured according to a manufacturing process illustrated in Fig. 1. Table 3 shows the dimensions of an intermediate product (process C) and a final product (process D). The drawing of process A included five steps. The neck-in processing of process D included seven steps.
In a final product (process D) shown in Table 3, h denotes the height of the opening end, r denotes the radius of a can body (2), and d denotes the radius of a neck 3, ha denotes the height of the can body (2), hc denotes the height of the neck 3, and R denotes the radius of a circular sheet blank that has the same weight as that of a final product before shaping (see Fig. 1). The radius R of a circular sheet blank was determined as described below. The weight of a blank sheet and the weight of a final product after trimming were measured. The radius of the blank sheet that has the same weight as that of the final product before shaping was determined from the measured weights. This radius was taken as the radius R of the circular sheet blank that has the same weight as that of the final product before shaping.

1) Blanking (diameter of blank sheet: 66 to 94 mm)
2) Drawing and ironing (process A)
A can body (intermediate product) having a radius r and height h in the range of r/R = 0.24 to 0.34 and h/(R - r) = 1.84 to 3.09 was manufactured by five-step drawing. Furthermore, ironing was also appropriately performed to manufacture a desired can body.
3) Doming of case bottom (process B)
The bottom of the can was bulged into a hemisphere having a depth of 6 mm.
4) Trimming (process C)
The top end of the can was trimmed by 2 mm.
5) Neck-in processing of upper part of tube (process D)
The upper part of the tube was subjected to neck-in processing. More specifically, a die necking process was performed by pushing an opening end against a die having a tapered inner surface to reduce the diameter of the opening end. Thus, a can body having a can body shape as shown in Table 3 was manufactured.
The adhesion, the formability, and the appearance of a film layer of the can body thus manufactured were evaluated as described below. Table 4 shows the results.

Adhesion Test

The can body was cut into a generally rectangular specimen having the long side in the height direction and having a width of 15 mm in the circumferential direction. Only the steel sheet of the specimen was linearly cut in the circumferential direction at a height of 10 mm from the bottom. Thus, the specimen was composed of a portion having a length of 10 mm from the bottom in the height direction and the remainder, disposed at opposite sides of the cutting position. The portion having a length of 10 mm was joined (welded) to a steel sheet having a width of 15 mm and a length of 60 mm. While the steel sheet having a length of 60 mm was held by hand, a film of the remainder was peeled by 10 mm from the cutting position. A 180° peel test was performed with the peeled portion of the remainder and the steel sheet having a length of 60 mm being as grip sections. A measured minimum peel strength was taken as an indicator of the adhesion.

Peel Strength

Less than 5 N/15 mm: Poor
5 N/15 mm or more and less than 7 N/15 mm: Good
7 N/15 mm or more: Excellent

<Evaluation of film formability>

The outer surface of the resin layer after can processing was inspected visually and with an optical microscope for the breakage of the film. Normal appearance was considered to be good. The presence of a breakage or a crack was considered to be poor.

Evaluation Results

Can bodies C1 to C20, which were working examples of the present invention, had excellent film adhesion and excellent formability.
Can bodies C21 to C23, which were examples not within the scope of the present invention, had a relatively high aspect ratio and had good, but not excellent, adhesion.
A can body C27, the volume percentage of whose subphase was lower than the lower limit of the present invention, had poor formability and poor adhesion.
Can bodies C28 and C31, Tg of whose subphase was higher than the upper limit of the present invention, had poor formability and poor adhesion.
A can body 29, which included a PET single phase, had poor formability and poor adhesion.
A can body C30, which included no PET main phase and was coated with a single phase of a subphase resin (acid-modified ethylene-methyl methacrylate copolymer; 50% of the acid-modified ethylene was neutralized with Zn), had poor formability and poor adhesion.

Can bodies C32 to 34, which had an aspect ratio out of the range of the present invention, had poor adhesion and poor formability.

A laminated steel sheet according to the present invention includes a compound resin layer, which is composed of a main phase of a polyester resin and a subphase resin under specific conditions, as a laminate layer. A two-piece can manufactured from the laminated steel sheet can be free from delamination and breakage of the laminate layer because of stress-relieving effect of the subphase resin, and can achieve a high strain level as in aerosol cans.

Table 1

| Steel sheet specimen No. | Main phase | Subphase | | | | Lamination process | Notes |
|---|---|---|---|---|---|---|---|
| | Resin type | Resin type | Tg | Volume percentage (vol%) | Oblateness (%) | | |
| A1 | PET | Acid-modified ethylene (50% neutralized with Zn)-methyl methacrylate copolymer | ≤-30°C | 14 | 0.12 | Extrusion | Working example |
| A2 | PET | Acid-modified ethylene (50% neutralized with Zn)-methyl methacrylate copolymer | ≤-30°C | 28 | 0.13 | Extrusion | Working example |
| A3 | PET | Acid-modified ethylene (50% neutralized with Zn)-methyl methacrylate copolymer | ≤-30°C | 3 | 0.14 | Extrusion | Working example |
| A4 | PET | Acid-modified ethylene (50% neutralized with Zn)-methyl methacrylate copolymer | ≤-30°C | 14 | 0.11 | Extrusion | Working example |
| A5 | PET | Acid-modified ethylene (50% neutralized with Zn)-methyl methacrylate copolymer | ≤-30°C | 14 | 0.10 | Extrusion | Working example |
| A6 | PET-I (4) | Acid-modified ethylene (50% neutralized with Zn)-methyl methacrylate copolymer | ≤-30°C | 14 | 0.09 | Extrusion | Working example |

(continued)

| Steel sheet specimen No. | Main phase | Subphase | | | | Lamination process | Notes |
|---|---|---|---|---|---|---|---|
| | Resin type | Resin type | Tg | Volume percentage (vol%) | Oblateness (%) | | |
| A7 | PET-I (8) | Acid-modified ethylene (50% neutralized with Zn)-methyl methacrylate copolymer | ≤-30°C | 14 | 0.06 | Extrusion | Working example |
| A8 | PET-I (12) | Acid-modified ethylene (50% neutralized with Zn)-methyl methacrylate copolymer | ≤-30°C | 14 | 0.01 | Extrusion | Working example |
| A9 | PET | Acid-modified ethytene-methyl methacrylate copolymer | ≤30°C | 15 | 0.15 | Extrusion | Working example |
| A10 | PET | Acid-modified polypropylene | ≤-20°C | 14 | 0.18 | Extrusion | Working example |
| A11 | PET | Acid-modified polyethylene | ≤-110°C | 14 | 0.12 | Extrusion | Working example |
| A12 | PET | LLDPE | -110°C | 15 | 0.11 | Extrusion | Working example |
| A13 | PET | HDPE | -125°C | 14 | 0.09 | Extrusion | Working example |
| A14 | PET | PP | -125°C | 14 | 0.13 | Extrusion | Working example |

PET : Polyethylene terephthalate PET-I(4) : polyethylene terephthalate-polyethylene isophthalate copolymer isophthalate (4 mol%) PET-I(8) : Polyethylene terephthalate-polyethylene isophthalate copolymer isophthalate (8 mol%) PET-I(12) : Polyethylene terephthalate-polyethylene isophthalate copolymer isophthalate (12 mol%) PBT : Polybutylene terephthalate PET-PBT(60) : Polyethylene terephthalate-polybutylene terephthalate copolymer polybutylene terephthalate (60 mol%) EPR : Ethylene propylene rubber LLDPE : Linear low-density polyethylene,

HDPE : High-density polyethylene PP : Polypropylene

Table 2

| Steel sheet specimen No. | Main phase | Sub phase | | | | Lamination process | Notes |
|---|---|---|---|---|---|---|---|
| | Resin type | Resin type | Tg | Volume percentage (vol%) | Oblateness (%) | | |
| A15 | PBT | Acid-modified ethylene (50% neutralized with Zn)-methyl methacrylate copolymer | ≤-30°C | 14 | 0.11 | Extrusion | Working example |
| A16 | PET-PBT (60) | Acid-modified ethylene (50% neutralized with Zn)-methyl methacrylate copolymer | ≤-30°C | 14 | 0.15 | Extrusion | Working example |
| A17 | PBT | EPR | ≤-30°C | 14 | 0.20 | Heat lamination 2 | Working example |
| A18 | PET | Acid-modified polyethylene | ≤-110°C | 14 | 0.13 | Heat lamination 1 | Working example |
| A19 | PET | Acid-modified polyethylene | ≤-110.C | 14 | 0.14 | Heat lamination 2 | Working example |
| A20 | PET | Acid-modified polyethylene | ≤-110°C | 14 | 0.20 | Extrusion | Working example |
| A21 | PET | Acid-modified polyethylene | ≤-110°C | 14 | 0.30 | Extrusion | example* |
| A22 | PET | Acid-modified polyethylene | ≤-110°C | 14 | 0.40 | Extrusion | example* |
| A23 | PET | Acid-modified polyethylene | ≤-110°C | 14 | 0.50 | Extrusion | example * |
| A24 | PET | Acid-modified ethylene (50% neutralized with Zn)-methyl methacrylate copolymer | ≤-30°C | 1 | 0.11 | Extrusion | Comparative example |
| A25 | PET | PET-I(4) | 77°C | 14 (Compatible) | - | Extrusion | Comparative example |
| A26 | PET | | | 0 | - | Extrusion | Comparative example |

(continued)

| Steel sheet specimen No. | Main phase | Sub phase | | | | Lamination process | Notes |
|---|---|---|---|---|---|---|---|
| | Resin type | Resin type | Tg | Volume percentage (vol%) | Oblateness (%) | | |
| A27 | - | Acid-modified ethylene (50% neutralized with Zn)-methyl methacrylate copolymer | ≤-30°C | 100 | - | Extrusion | Comparative example |
| A28 | PET | Polyvinyl acetate | 32°C | 14 | 0.38 | Heat lamination 1 | Comparative example |
| A29 | PET | Acid-modified polyethylene, | ≤-110°C | 14 | 0.72 | Extrusion | Comparative example |
| A30 | PET | Acid-modified polyethylene | ≤-110°C | 14 | 0.95 | Heat lamination 1 | Comparative example |
| A31 | PET | Acid-modified polyethylene | ≤-110°C | 14 | 0.85 | Heat lamination 1 | Comparative example |

* not within the scope of the present invention
PET : Polyethylene terephthalate
PET-I(4) : Polyethylene terephthalate-polyethylene isophthalate copolymer isophthalate (4 mol%)
PET-I(8) : Polyethylene terephthalate-polyethylene isophthalate copolymer isophthalate (8 mol%)
PET-I(12) : polyethylene terephthalate-polyethylene isophthalate copolymer isophthalate (12 mol%)
PBT : Polybutylene terephthalate
PET PBT(60) : Polyethylene terephthalate-polybutylene terephthalate copolymer polybutylene terephthalate (60 mol%)
EPR : Ethylene propylene rubber
LLDPE : Linear low-density polyethylene
HDPE : High-density polyethylene
PP : Polypropylene

Table 3

| Can body shape | Blank radius $R_0$(mm) | Intermediate product (process C) | | Final product (process D) | | | | | | | | Rate of change in thickness** |
|---|---|---|---|---|---|---|---|---|---|---|---|---|
| | | r(mm) | h(mm) | r(mm) | d(mm) | h(mm) | ha (mm) | hc (mm) | Blank radius R (mm)* | d/R | h/(R-r) | |
| B1 | 41.0 | 11.0 | 63.6 | 11.0 | 7.8 | 65.9 | 47.0 | 9.9 | 40.4 | 0.19 | 2.24 | 1.20 |
| B2 | 47.0 | 11.0 | 63.5 | 11.0 | 7.8 | 65.9 | 47.0 | 9.9 | 46.6 | 0.17 | 1.85 | 1.45 |
| B3 | 35.5 | 11.0 | 63.5 | 11.0 | 7.8 | 65.9 | 47.0 | 9.9 | 34.8 | 0.22 | 2.77 | 0.75 |

(continued)

| Can body shape | Blank radius $R_0$(mm) | Intermediate product (process C) | | Final product (process D) | | | | | | | | Rate of change in thickness** |
|---|---|---|---|---|---|---|---|---|---|---|---|---|
| | | r(mm) | h(mm) | r(mm) | d(mm) | h(mm) | ha (mm) | hc (mm) | Blank radius R (mm)* | d/R | h/(R-r) | |
| B4 | 33.0 | 11.0 | 63.5 | 11.0 | 7.8 | 65.9 | 47.0 | 9.9 | 32.2 | 0.24 | 3.10 | 0.65 |

*) Blank radius R was calculated from the weight of a final product.
**) Minimum thickness of a can body / Thickness of a blank sheet. Both of the thicknesses are the thicknesses of steel sheets.

Table 4

| Can body No. | Steel sheet specimen No. | Can body shape | Film adhesion | Film formability | Notes |
|---|---|---|---|---|---|
| C1 | A1 | B1 | ⊙ | ○ | Working example |
| C2 | A2 | B1 | ⊙ | ○ | Working example |
| C3 | A3 | B1 | ⊙ | ○ | Working example |
| C4 | A4 | B1 | ⊙ | ○ | Working example |
| C5 | A5 | B1 | ⊙ | ○ | Working example |
| C6 | A6 | B1 | ⊙ | ○ | Working example |
| C7 | A7 | B1 | ⊙ | ○ | Working example |
| C8 | A8 | B1 | ⊙ | ○ | Working example |
| C9 | A9 | B1 | ⊙ | ○ | Working example |
| C10 | A10 | B1 | ⊙ | ○ | Working example |
| C11 | A11 | B1 | ⊙ | ○ | Working example |
| C12 | A12 | B1 | ⊙ | ○ | Working example |
| C13 | A13 | B1 | ⊙ | ○ | Working example |
| C14 | A14 | B1 | ⊙ | ○ | Working example |
| C15 | A15 | B1 | ⊙ | ○ | Working example |
| C16 | A16 | B1 | ⊙ | ○ | Working example |
| C17 | A17 | B1 | ⊙ | ○ | Working example |
| C18 | A18 | B1 | ⊙ | ○ | Working example |
| C19 | A19 | B1 | ⊙ | ○ | Working example |
| C20 | A20 | B1 | ⊙ | ○ | Working example |
| C21 | A21 | B1 | ○ | ○ | example * |
| C22 | A22 | B1 | ○ | ○ | example * |
| C23 | A23 | B1 | ○ | ○ | example * |
| C24 | A11 | B2 | ⊙ | ○ | Working example |
| C25 | A11 | B3 | ⊙ | ○ | Working example |
| C26 | A11 | B4 | ⊙ | ○ | Working example |

(continued)

| Can body No. | Steel sheet specimen No. | Can body shape | Film adhesion | Film formability | Notes |
|---|---|---|---|---|---|
| C27 | A24 | B1 | $\times$ | $\times$ | Comparative example |
| C28 | A25 | B1 | $\times$ | $\times$ | Comparative example |
| C29 | A26 | B1 | $\times$ | $\times$ | Comparative example |
| C30 | A27 | B1 | $\times$ | $\times$ | Comparative example |
| C31 | A28 | B1 | $\times$ | $\times$ | Comparative example |
| C32 | A29 | B1 | $\times$ | $\times$ | Comparative example |
| C33 | A30 | B1 | $\times$ | $\times$ | Comparative example |
| C34 | A31 | B1 | $\times$ | $\times$ | Comparative example |
| * not within the scope of the present invention | | | | | |

Industrial Applicability

A two-piece can body manufactured from a laminated steel sheet according to the present invention achieves a high strain level as in two-piece aerosol cans and is free from delamination and breakage of a resin layer. Furthermore, the laminated steel sheet includes a steel sheet material that is inexpensive and strong even at a small thickness. Thus, a high-strength and corrosion resistant two-piece can can be mass-produced at low cost. The present invention can therefore make a significant contribution to the industry.

**Claims**

1. A laminated steel sheet for use in the manufacture of a two-piece can body, comprising a polyester resin layer on at least one side of the steel sheet, the polyester resin layer containing 3% to 30% by volume of a dispersed incompatible subphase resin having a glass transition point of 5°C or less and a cross section aspect ratio of 0.20 or less,
wherein the cross section aspect ratio is defined by (major axis - minor axis)/(major axis) of the cross section parallel to the machine direction of the laminated steel sheet,
wherein the two-piece can body satisfies the following three formulae:

$$d \leq r;$$

$$0.1 \leq d/R \leq 0.25;$$

and

$$1.5 \leq h/(R - r) \leq 4,$$

wherein R denotes the radius of a circular laminated steel sheet that has the same weight as that of the two-piece can body before shaping, h denotes the height of the can body, r denotes the maximum radius of the can body, and d denotes the minimum radius of the can body.

2. The laminated steel sheet according to Claim 1, wherein 70 to 100 mol% of the polyester resin is composed of a diol component of ethylene glycol and at least one dicarboxylic acid component selected from the group consisting of terephthalic acid and isophthalic acid.

3. The laminated steel sheet according to Claim 1, wherein the subphase resin is composed of a polyolefin.

4. The laminated steel sheet according to Claim 1, wherein the subphase resin is at least one selected from the group consisting of polyethylene, polypropylene, and ionomers.

5. A two-piece can body made of a laminated steel sheet, comprising a polyester resin layer on at least one side of the steel sheet, the polyester resin layer containing 3% to 30% by volume of a dispersed incompatible subphase resin having a glass transition point of 5°C or less and a cross section aspect ratio of 0.20 or less,
wherein the cross section aspect ratio is defined by (major axis - minor axis)/(major axis) of the cross section parallel to the machine direction of the laminated steel sheet,
wherein the two-piece can body satisfies the following three formulae:

$$d \leq r;$$

$$0.1 \leq d/R \leq 0.25;$$

and

$$1.5 \leq h/(R - r) \leq 4,$$

wherein R denotes the radius of a circular laminated steel sheet that has the same weight as that of the two-piece can body before shaping, h denotes the height of the can body, r denotes the maximum radius of the can body, and d denotes the minimum radius of the can body.

**Patentansprüche**

1. Laminiertes Stahlblech zur Verwendung bei der Herstellung des Dosenkörpers einer zweiteiligen Dose, das eine Polyesterharzschicht auf mindestens einer Seite des Stahlblechs umfasst, wobei die Polyesterharzschicht 3 bis 30 Volumen- % an einem dispergierten inkompatiblen Subphasenharz mit einem Glasübergangspunkt von 5°C oder weniger und einem Querschnittsseitenverhältnis von 0, 20 oder weniger enthält,
wobei das Querschnittsseitenverhältnis durch (Hauptachse- Nebenachse) / (Hauptachse) des Querschnitts parallel zur Bearbeitungsrichtung des laminierten Stahlblechs definiert ist,
wobei der Dosenkörper der zweiteiligen Dose die folgenden drei Formeln erfüllt:

$$d \leq r;$$

$$0,1 \leq d/R \leq 0,25;$$

und

$$1,5 \leq h/(R - r) \leq 4,$$

wobei R den Radius eines kreisrunden laminierten Stahlblechs, das das gleiche Gewicht wie das des Dosenkörpers der zweiteiligen Dose vor dem Formen aufweist, bezeichnet, h die Höhe des Dosenkörpers bezeichnet, r den maximalen Radius des Dosenkörpers bezeichnet und d den minimalen Radius des Dosenkörpers bezeichnet.

**2.** Laminiertes Stahlblech nach Anspruch 1, wobei 70 bis 100 Mol-% des Polyesterharzes aus einer Diolkomponente aus Ethylenglykol und mindestens einer Dicarbonsäurekomponente, die aus der Gruppe von Terephthalsäure und Isophthalsäure ausgewählt ist, bestehen.

**3.** Laminiertes Stahlblech nach Anspruch 1, wobei das Subphasenharz aus einem Polyolefin besteht.

**4.** Laminiertes Stahlblech nach Anspruch 1, wobei das Subphasenharz mindestens eines ist, das aus der Gruppe von Polyethylen, Polypropylen und Ionomeren ausgewählt ist.

**5.** Dosenkörper einer zweiteiligen Dose, der aus einem laminierten Stahlblech besteht, das eine Polyesterharzschicht auf mindestens einer Seite des Stahlblechs umfasst, wobei die Polyesterharzschicht 3 bis 30 Volumen- % an einem dispergierten inkompatiblen Subphasenharz mit einem Glasübergangspunkt von 5°C oder weniger und einem Querschnittsseitenverhältnis von 0, 20 oder weniger enthält,
wobei das Querschnittsseitenverhältnis durch (Hauptachse- Nebenachse) / (Hauptachse) des Querschnitts parallel zur Bearbeitungsrichtung des laminierten Stahlblechs definiert ist,
wobei der Dosenkörper der zweiteiligen Dose die folgenden drei Formeln erfüllt:

$$d \leq r;$$

$$0,1 \leq d/R \leq 0,25;$$

und

$$1,5 \leq h/(R - r) \leq 4,$$

wobei R den Radius eines kreisrunden laminierten Stahlblechs, das das gleiche Gewicht wie das des Dosenkörpers der zweiteiligen Dose vor dem Formen aufweist, bezeichnet, h die Höhe des Dosenkörpers bezeichnet, r den maximalen Radius des Dosenkörpers bezeichnet und d den minimalen Radius des Dosenkörpers bezeichnet.

**Revendications**

**1.** Feuille d'acier stratifiée destinée à être utilisée pour la fabrication d'un corps de boîte à deux pièces, comprenant une couche de résine polyester sur au moins un côté de la feuille d'acier, la couche de résine polyester contenant de 3 % à 30 % en volume d'une résine de sous-phase incompatible dispersée ayant un point de transition vitreuse de 5 °C ou moins et un rapport de côté en coupe de 0,20 ou moins,
dans laquelle le rapport de côté en coupe est défini par (grand axe - petit axe)/(grand axe) de la coupe parallèle à la direction machine de la feuille d'acier stratifiée,
dans laquelle le corps de boîte à deux pièces satisfait les trois formules suivantes :

$$d \leq r ;$$

$$0,1 \leq d/R \leq 0,25 ;$$

et

$$1,5 \leq h/(R - r) \leq 4,$$

dans lesquelles R indique le rayon d'une feuille d'acier stratifiée circulaire qui a le même poids que le corps de boîte à deux pièces avant façonnage, h indique la hauteur du corps de boîte, r indique le rayon maximal du corps de boîte, et d indique le rayon minimal du corps de boîte.

2. Feuille d'acier stratifiée selon la revendication 1, dans laquelle 70 à 100 % en mol de la résine polyester est composé d'un composant diol d'éthylène glycol et d'au moins un composant acide dicarboxylique choisi dans le groupe consistant en l'acide téréphtalique et l'acide isophtalique.

3. Feuille d'acier stratifiée selon la revendication 1, dans laquelle la résine de sous-phase est composée d'une polyoléfine.

4. Feuille d'acier stratifiée selon la revendication 1, dans laquelle la résine de sous-phase est au moins un élément choisi dans le groupe consistant en le polyéthylène, le polypropylène et les ionomères.

5. Corps de boîte à deux pièces réalisé en feuille d'acier stratifiée, comprenant une couche de résine polyester sur au moins un côté de la feuille d'acier, la couche de résine polyester contenant de 3 % à 30 % en volume d'une résine de sous-phase incompatible dispersée ayant un point de transition vitreuse de 5 °C ou moins et un rapport de côté en coupe de 0,20 ou moins,
dans lequel le rapport de côté en coupe est défini par (grand axe - petit axe) / (grand axe) de la coupe parallèle à la direction machine de la feuille d'acier stratifiée,
dans lequel le corps de boîte à deux pièces satisfait les trois formules suivantes :

$$d \leq r \ ;$$

$$0,1 \leq d/R \leq 0,25 \ ;$$

et

$$1,5 \leq h/(R - r) \leq 4,$$

dans lesquelles R indique le rayon d'une feuille d'acier stratifiée circulaire qui a le même poids que le corps de boîte à deux pièces avant façonnage, h indique la hauteur du corps de boîte, r indique le rayon maximal du corps de boîte, et d indique le rayon minimal du corps de boîte.

# FIG. 1

PROCESS A (r=d)

TRIMMING

PROCESS B    PROCESS C    PROCESS D (r>d)

EP 1 914 064 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7106394 A
- JP 2526725 B
- JP 2004148324 A
- JP 59035344 A
- JP 61022626 A